# EUROPEAN PATENT APPLICATION

(11) **EP 4 614 121 A1**
(43) Date of publication of application: **10.09.2025**
(21) Application number: 23885567.0
(22) Date of filing: 23.10.2023
(51) Int. Cl.: G01G 23/01

(54) **WEIGHING DEVICE, WEIGHING ADJUSTMENT DEVICE, AND WEIGHING ADJUSTMENT METHOD**

(30) Priority: 01.11.2022 JP 2022175613
(71) Applicant: Shinko Denshi Co., Ltd., Itabashi-ku Tokyo 173-0004 (JP)
(72) Inventor: KIMURA, Takeshi, Tokyo 173-0004 (JP); ISHIDA, Masafumi, Tokyo 173-0004 (JP)
(74) Representative: Global IP Europe Patentanwaltskanzlei
(86) International application number: PCT/JP2023/038194
(87) International publication number: WO 2024/095807

(57) **Abstract**

The weighing device 1A according to one embodiment includes a weighing pan 2 on which an object to be weighed is placed, a load cell 4 having a strain body 5 disposed below the weighing pan 2 so that a load of the object placed on the weighing pan 2 is applied to the strain body 5, and a housing member 3 accommodating the load cell 4. The housing member 3 is provided with a through-hole 31a for guiding laser light irradiated from the outside of the housing member 3 to the strain body 5 disposed inside the housing member 3.

## Description

### Technical Field

The present disclosure relates to a weighing device, a weighing adjustment device, and a weighing adjustment method.

### Background Art

Patent Literature 1 discloses a laser processing method for removing a part of a recess (thinned portion) of a monolithic structure (strain body of a load cell) by irradiating the recess with laser light so that the value measured by the force sensor of the weighing cell becomes the expected result when an external force is applied to the monolithic structure for weighing technical applications.

### Citation List

### Patent Literature

Patent Literature 1: Japanese Patent No. 6932020

### Summary of Invention

### Technical Problem

The laser processing method disclosed in Patent Literature 1 is performed with the monolithic structure exposed outside without being housed in a housing member (main body case). In other words, the laser processing method is performed at a stage before the monolithic structure is housed in the housing member to obtain a completed state (product form). Therefore, even if a part of the monolithic structure is removed by the laser processing method so that the measured value becomes the expected result, there is a possibility that an eccentric load error may occur due to reasons such as not performing eccentric load adjustment (adjustment to bring the eccentric load error within the allowable range) after the monolithic structure is attached to the housing member and brought to the completed state.

Accordingly, an aspect of the present disclosure aims to provide a weighing device, a weighing adjustment device, and a weighing adjustment method that can effectively reduce eccentric load error.

### Solution to Problem

(1) A weighing device according to an aspect of the present disclosure includes a weighing pan on which an object to be weighed is placed, a load cell having a strain body disposed below the weighing pan such that a load of the object placed on the weighing pan is applied to the strain body, and a housing member accommodating the load cell. The housing member is provided with a through hole for guiding laser light irradiated from outside the housing member to the strain body disposed inside the housing member.
(2) In the weighing device described in (1), the strain body may have a thinned plate spring portion, and the through hole may be provided at a position facing the plate spring portion.
(3) In the weighing device described in (2), the plate spring portion may include a first plate spring portion provided on a side opposite to a side where the weighing pan is positioned with respect to the strain body, the housing member may include a first member disposed on the side opposite to the side where the weighing pan is positioned with respect to the strain body, and the through hole may include a first through hole provided in the first member so as to face the first plate spring portion.
(4) In the weighing device described in (2) or (3), the plate spring portion may include a second plate spring portion provided on a side where the weighing pan is positioned with respect to the strain body, the housing member may include a second member disposed on the side where the weighing pan is positioned with respect to the strain body, and the through hole may include a second through hole provided in the second member so as to face the second plate spring portion.
(5) A weighing adjustment device according to another aspect of the present disclosure is a weighing adjustment device for adjusting the weighing device described in any one of (1) to (4) so that an eccentric load error is reduced, including an irradiation unit configured to irradiate the strain body with laser light through the through hole provided in the housing member, and a control unit configured to acquire a weighing value measured by the load cell when a weight having a predetermined mass is placed on each of a plurality of regions of the weighing pan, determine an irradiation position and an amount of processing of the laser light based on the acquired weighing values corresponding to each of the plurality of regions, and control the operation of the irradiation unit based on the determined irradiation position and amount of processing.
(6) In the weighing adjustment device described in (5), the control unit may be configured to repeatedly execute a first process, a second process, and a third process until the eccentric load error of the weighing device satisfies a predetermined allowable condition. The first process is a process of acquiring the weighing values corresponding to each of the plurality of regions of the weighing pan. The second process is a process of determining the irradiation position and the amount of processing based on the weighing values corresponding to each of the plurality of regions acquired in the first process. The third process is a process of irradiating the strain body with the laser light based on the irradiation position and the amount of processing determined in the second process and removing a part of the strain body by controlling the irradiation unit.
(7) The weighing adjustment device described in (6) may further include a suction unit configured to suck scattering particles, which are part of the strain body scattered into the air by the irradiation of the laser light, and the control unit may control the operation of the suction unit so that the suction by the suction unit is executed in parallel with the third process and not in parallel with the first process.
(8) The weighing adjustment device described in (6) or (7) may further include a transfer unit configured to transfer the weight between any position on the weighing pan and a position away from the weighing pan, and the control unit may control the operation of the transfer unit and execute the first process by acquiring the weighing value each time the transfer operation of the weight to each of the plurality of regions is completed.
(9) The weighing adjustment device described in any one of (6) to (8) may further include a storage unit configured to store relational information indicating a relationship between a position and an amount of the part of the strain body removed by the laser light and a change amount of the eccentric load error of the weighing device, and the control unit may determine the irradiation position and the amount of processing capable of reducing the current eccentric load error based on the current eccentric load error obtained from the weighing values corresponding to each of the plurality of regions and the relational information stored in the storage unit in the second process.
(10) A weighing adjustment method according to another aspect of the present disclosure is a weighing adjustment method for adjusting the weighing device described in any one of (1) to (4) so that an eccentric load error is reduced, including a first step of acquiring weighing values measured by the load cell when a weight having a predetermined mass is placed on each of a plurality of regions of the weighing pan, a second step of determining an irradiation position and an amount of processing of the laser light with respect to the strain body based on the weighing values corresponding to each of the plurality of regions acquired in the first step, and a third step of irradiating the strain body with the laser light through the through hole provided in the housing member and removing a part of the strain body based on the irradiation position and the amount of processing determined in the second step, and repeatedly executing the first step, the second step, and the third step until the eccentric load error of the weighing device satisfies a predetermined allowable condition.
(11) In the weighing adjustment method described in (10), the through hole of the housing member may be provided at a position facing a central portion of the weighing pan, and the central portion of the weighing pan may be provided with a through hole facing a part of the strain body through the through hole of the housing member, and in the third step, the laser light may be irradiated to a part of the strain body from above the weighing pan through the through hole of the weighing pan and the through hole of the housing member.

### Advantageous Effects of Invention

According to the present disclosure, it is possible to provide a weighing device, a weighing adjustment device, and a weighing adjustment method that can effectively reduce eccentric load error.

### Brief Description of Drawings

FIG. 1 is a perspective view of a weighing device according to a first embodiment.
FIG. 2 is a schematic cross-sectional view of the weighing device along line II-II of FIG. 1.
FIG. 3 is a bottom view of the weighing device.
FIG. 4 is a perspective view of a strain body.
FIG. 5 is a bottom view of the strain body.
FIG. 6 is a diagram showing a schematic configuration of a weighing adjustment device according to the first embodiment.
FIG. 7 is a diagram showing an example of the state of a plate spring portion after laser processing.
FIG. 8 is a diagram schematically showing an example of relational information.
FIG. 9 is a flowchart showing an example of a weighing adjustment process by the weighing adjustment device.
FIG. 10 is a diagram schematically showing an example of the weighing adjustment process.
FIG. 11 is a perspective view of a weighing device according to a second embodiment.
FIG. 12 is a plan view showing a state where the weighing pan of the weighing device of FIG. 11 is removed.
FIG. 13 is a diagram showing a schematic configuration of a weighing adjustment device according to the second embodiment.

### Description of Embodiments

Hereinafter, an embodiment of the present disclosure will be described in detail with reference to the drawings. In the following description, the same or equivalent elements are denoted by the same reference signs, and redundant descriptions are omitted.

### [First Embodiment]

### (Weighing Device)

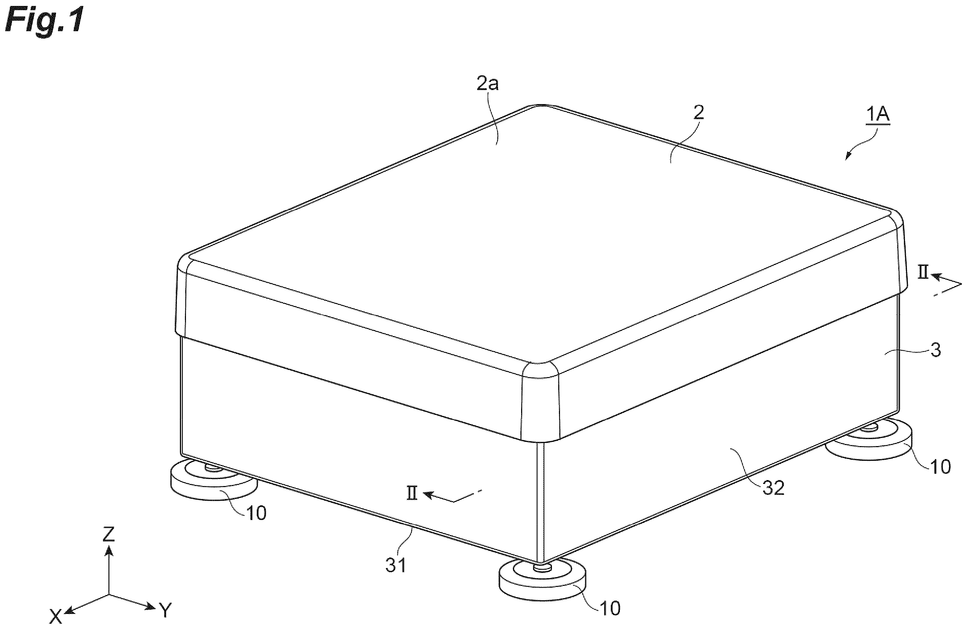

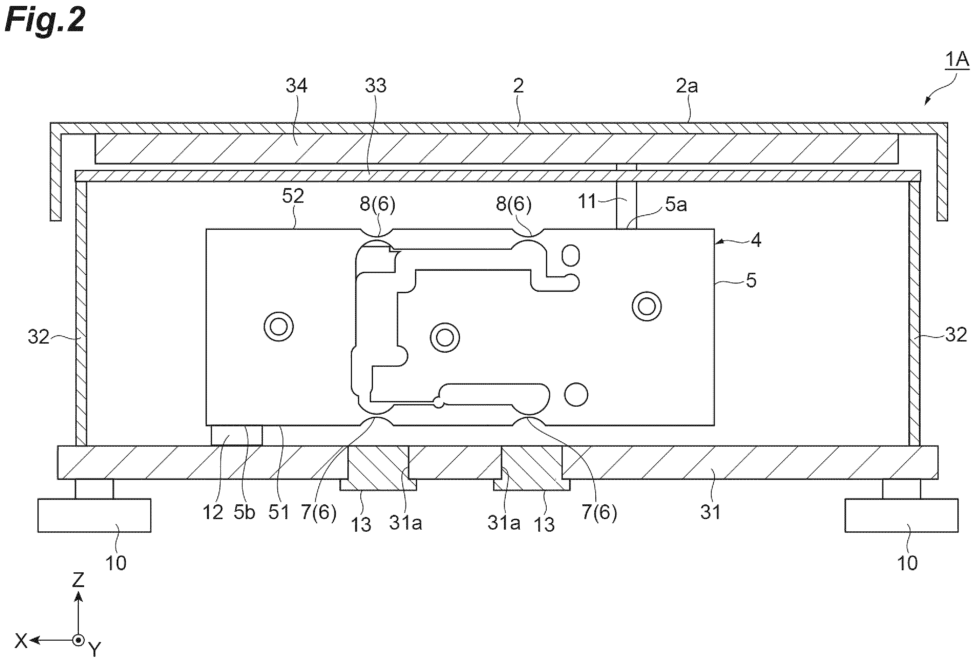

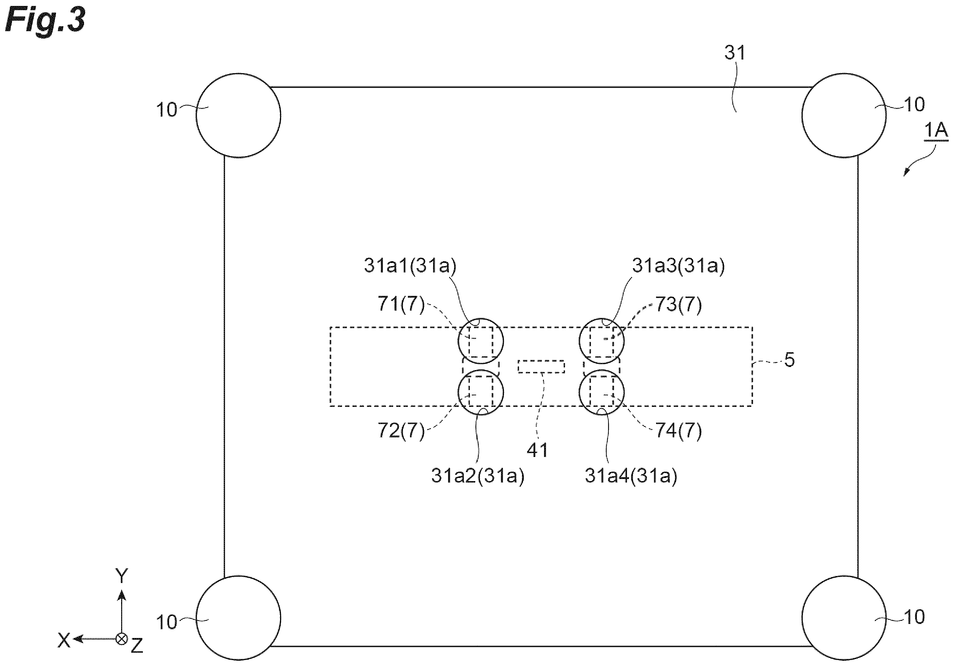

FIG. 1 is a perspective view of a weighing device 1A according to a first embodiment. FIG. 2 is a schematic cross-sectional view of the weighing device 1A along line II-II of FIG. 1. FIG. 3 is a bottom view of the weighing device 1A. As shown in FIGS. 1 to 3, the weighing device 1A includes a weighing pan 2 on which an object to be weighed is placed, a housing member 3, and a load cell 4 housed in the housing member 3. Four support legs 10 for supporting the housing member 3 (bottom wall portion 31 described later) are provided at the four corners of the bottom of the housing member 3. The weighing device 1A is an electronic scale configured to measure the weight of an article placed on the weighing pan 2.

As an example, the weighing surface 2a of the weighing pan 2 on which the object to be weighed is placed has a square or rectangular shape. However, the shape of the weighing surface 2a is not limited to the above, and may be, for example, circular. In this specification, for convenience, the direction perpendicular to the weighing surface 2a (vertical direction) is referred to as the Z-axis direction, the direction along a first side of the weighing surface 2a (front-rear direction) is referred to as the X-axis direction, and the direction along a second side (side perpendicular to the first side) of the weighing surface 2a (left-right direction) is referred to as the Y-axis direction.

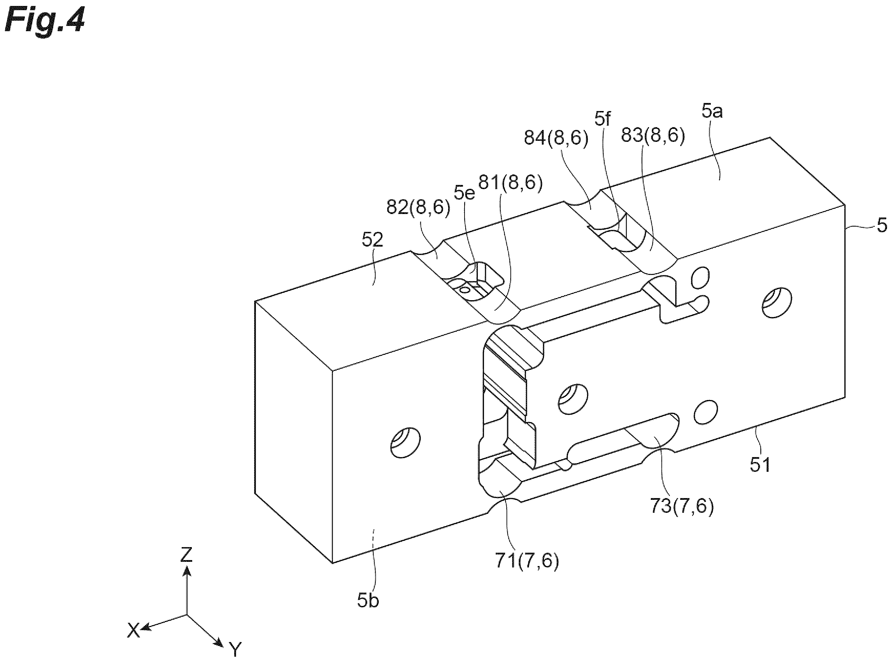

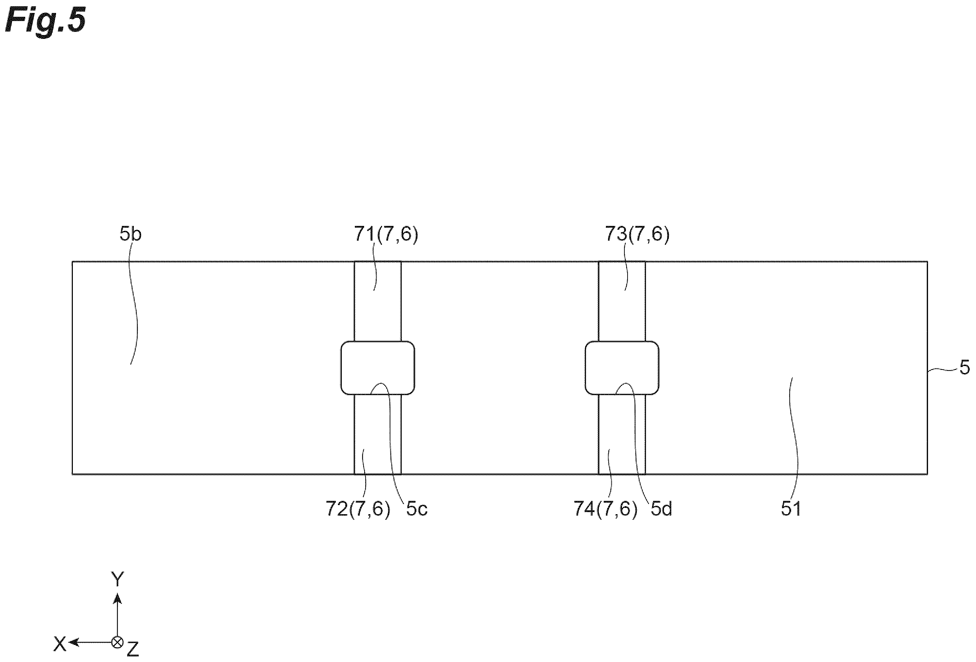

The load cell 4 has a strain body 5. FIG. 4 is a perspective view of the strain body 5. FIG. 5 is a bottom view of the strain body 5. As shown in FIG. 4, the strain body 5 has a substantially rectangular parallelepiped (rectangular block) outer shape. The strain body 5 has a so-called Roberval mechanism. The strain body 5 is an elastic body formed of a metal such as an aluminum alloy or stainless steel. The strain body 5 is disposed below the weighing pan 2 so that a load of the object to be weighed placed on the weighing pan 2 is applied to the strain body 5. The strain body 5 having the Roberval mechanism may be a monolithic type as disclosed in Patent Literature 1 or an assembled type as disclosed in Japanese Unexamined Patent Publication No. 2008-3031.

As shown in FIG. 2, the strain body 5 has a free end 5a connected to a support member 11 at the upper part of the strain body 5. The support member 11 is a columnar member extending in the Z-axis direction and connects the free end 5a to the housing member 3 (pan base 34 described later). The free end 5a is connected to the weighing pan 2 via the support member 11 and the pan base 34 and is a portion to which the load from the weighing pan 2 is applied. The strain body 5 also has a fixed end 5b connected to a support member 12 at the lower part of the strain body 5. The fixed end 5b is fixed to the bottom wall portion 31 via the support member 12. The shape of the strain body 5 and the positions of the free end 5a and the fixed end 5b are not limited to the above configuration. The shape, position, and number of the support members 11 and 12 are also not limited to the above configuration.

As shown in FIGS. 4 and 5, the strain body 5 has a lower surface 51 (surface facing the side opposite to the side where the weighing pan 2 is positioned with respect to the strain body 5) and an upper surface 52 (surface facing the side where the weighing pan 2 is positioned with respect to the strain body 5). The strain body 5 has a plurality (eight in this embodiment) of thinned plate spring portions 6 on both the lower surface 51 and the upper surface 52. As shown in FIG. 4, the plate spring portions 6 are portions thinned compared to other portions by providing curved recesses along the X-axis direction on both the upper and lower sides.

The plurality of plate spring portions 6 include a plurality (four in this embodiment) of lower plate spring portions 7 (first plate spring portions) provided on the lower surface 51 (side opposite to the side where the weighing pan 2 is positioned with respect to the strain body 5) and a plurality (four in this embodiment) of upper plate spring portions 8 (second plate spring portions) provided on the upper surface 52 (side where the weighing pan 2 is positioned with respect to the strain body 5). The four lower plate spring portions 7 and the four upper plate spring portions 8 are arranged to overlap each other in the Z-axis direction.

As shown in FIG. 5, the four lower plate spring portions 7 provided on the lower surface 51 of the strain body 5 include lower plate spring portions 71 and 72 disposed at positions facing each other in the left-right direction (Y-axis direction) with a through hole 5c interposed therebetween in the front (X-axis positive direction), and lower plate spring portions 73 and 74 disposed at positions facing each other in the left-right direction (Y-axis direction) with a through hole 5d interposed therebetween in the rear (X-axis negative direction). Assuming that the X-axis positive direction is the front, the lower plate spring portion 71 is a lower plate spring portion 7 disposed in the left front, the lower plate spring portion 72 is a lower plate spring portion 7 disposed in the right front, the lower plate spring portion 73 is a lower plate spring portion 7 disposed in the left rear, and the lower plate spring portion 74 is a lower plate spring portion 7 disposed in the right rear.

As shown in FIG. 4, the four upper plate spring portions 8 provided on the upper surface 52 of the strain body 5 include upper plate spring portions 81 and 82 disposed at positions facing each other in the left-right direction (Y-axis direction) with a through hole 5e interposed therebetween in the front (X-axis positive direction), and upper plate spring portions 83 and 84 disposed at positions facing each other in the left-right direction (Y-axis direction) with a through hole 5f interposed therebetween in the rear (X-axis negative direction). Assuming that the X-axis positive direction is the front, the upper plate spring portion 81 is an upper plate spring portion 8 disposed in the left front, the upper plate spring portion 82 is an upper plate spring portion 8 disposed in the right front, the upper plate spring portion 83 is an upper plate spring portion 8 disposed in the left rear, and the upper plate spring portion 84 is an upper plate spring portion 8 disposed in the right rear.

As an example, the load cell 4 has a so-called tuning fork type configuration. That is, as shown in FIG. 3, a tuning fork sensor 41 (vibration type load sensor) is incorporated in the strain body 5. More specifically, when an object to be weighed is placed on the weighing pan 2, a load corresponding to the weight of the object is applied to the free end 5a of the strain body 5, and the strain body 5 deforms. The load corresponding to the deformation of the strain body 5 is applied to the tuning fork sensor 41, and the vibration frequency of the tuning fork vibrator of the tuning fork sensor 41 changes according to the magnitude of the load. The tuning fork sensor 41 is connected to a weight sensor (not shown) configured to measure the weight of the object to be weighed based on the vibration (vibration frequency) of the tuning fork vibrator. However, the configuration of the load cell 4 is not limited to the above tuning fork type, and other configurations such as a strain gauge type may be used.

The housing member 3 is a member that accommodates the load cell 4 below the weighing pan 2. That is, the housing member 3 is a member disposed to cover the load cell 4 from the outside. The housing member 3 is not limited to a member formed integrally and may be configured by a plurality of separate members. In this embodiment, as an example, the housing member 3 includes a bottom wall portion 31 (first member), a side wall portion 32, a top wall portion 33 (second member), and a pan base 34 (second member).

The bottom wall portion 31 is disposed below the load cell 4 (side opposite to the side where the weighing pan 2 is positioned with respect to the strain body 5). More specifically, the bottom wall portion 31 is disposed at a position facing the lower surface 51 of the strain body 5. The bottom wall portion 31 supports the fixed end 5b of the strain body 5 via the support member 12. The side wall portion 32 is formed in a quadrangular tube shape connected to the edge of the bottom wall portion 31 and extending upward so as to surround the load cell 4 when viewed from the Z-axis direction. The top wall portion 33 and the pan base 34 are disposed at positions facing the upper surface 52 of the strain body 5 (side where the weighing pan 2 is positioned with respect to the strain body 5). The top wall portion 33 is disposed between the load cell 4 and the weighing pan 2 so as to cover the upper part of the load cell 4. The top wall portion 33 is provided with a hole for passing the support member 11. That is, the support member 11 passes through the top wall portion 33 via the hole. The pan base 34 is a base member for attaching the weighing pan 2 and is disposed above the load cell 4 (above the top wall portion 33). As shown in FIG. 2, the weighing pan 2 is supported by the pan base 34. As described above, the pan base 34 is supported by the free end 5a of the strain body 5 via the support member 11.

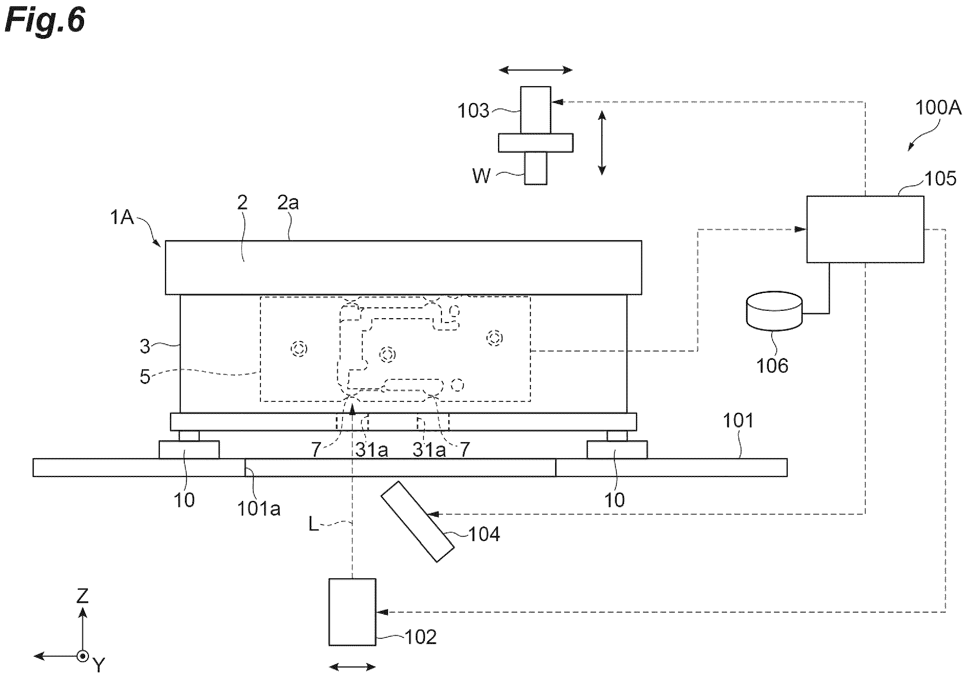

The housing member 3 is provided with through holes 31a (first through holes) for guiding laser light L (see FIG. 6) irradiated from outside the housing member 3 to the strain body 5 disposed inside the housing member 3. In this embodiment, as an example, a plurality (four in this embodiment) of circular through holes 31a are provided in the bottom wall portion 31. Each through hole 31a is provided at a position facing the lower plate spring portion 7. That is, the through holes 31a are provided so that the lower surface of the lower plate spring portion 7 can be seen through the through holes 31a when viewed from the outside of the housing member 3 (bottom wall portion 31).

As an example, as shown in FIG. 3, each through hole 31a is provided to overlap the entire lower surface of the corresponding lower plate spring portion 7. FIG. 3 shows a state where the seal member 13 (see FIG. 2) described later is not provided (that is, the through holes 31a are not blocked). In the example of FIG. 3, when the bottom wall portion 31 is viewed from below along the Z-axis direction, the entire lower surface of the lower plate spring portion 7 corresponding to each through hole 31a can be seen through each through hole 31a. However, the through holes 31a do not necessarily have to be provided directly below the corresponding lower plate spring portions 7. For example, the through holes 31a may be provided so that at least a part of the lower surface of the corresponding lower plate spring portion 7 can be seen through the through holes 31a when the bottom wall portion 31 is viewed from below at a predetermined angle inclined with respect to the Z-axis direction. In this embodiment, the plurality of through holes 31a include a through hole 31a1 provided corresponding to the lower plate spring portion 71, a through hole 31a2 provided corresponding to the lower plate spring portion 72, a through hole 31a3 provided corresponding to the lower plate spring portion 73, and a through hole 31a4 provided corresponding to the lower plate spring portion 74.

The through holes 31a provided in the bottom wall portion 31 are used for the eccentric load adjustment process (eccentric load adjustment by irradiating the lower plate spring portion 7 with laser light L) using the weighing adjustment device 100A described later. After the completion of the eccentric load adjustment process, as shown in FIG. 2, the bottom wall portion 31 may be provided with a seal member 13 that blocks the through holes 31a. The seal member 13 can prevent external dust and the like from entering the inside of the housing member 3 through the through holes 31a after the eccentric load adjustment process, thereby suppressing the occurrence of malfunction of the weighing device 1A due to such dust and the like.

### (Weighing Adjustment Device)

FIG. 6 is a diagram showing a schematic configuration of a weighing adjustment device 100A according to the first embodiment. The weighing adjustment device 100A is a device for adjusting the weighing device 1A so that the eccentric load error is reduced. The weighing adjustment device 100A includes a support base 101, an irradiation unit 102, a transfer unit 103, a suction unit 104, a control unit 105, and a storage unit 106.

The support base 101 is a member that supports the weighing device 1A. As an example, the support base 101 is a flat plate, and the weighing device 1A is supported on the support base 101 by placing the four support legs 10 of the weighing device 1A on the support base 101. A space is provided below the support base 101 for placing the irradiation unit 102 and the suction unit 104. The support base 101 is provided with a through hole 101a that overlaps the region where the through holes 31a of the bottom wall portion 31 are provided when viewed from the Z-axis direction. That is, when the support base 101 is viewed from below along the Z-axis direction, the lower plate spring portion 7 of the strain body 5 disposed inside the housing member 3 can be seen through the through holes 101a and 31a.

The irradiation unit 102 is a device for irradiating laser light L. The irradiation unit 102 is configured to irradiate the strain body 5 with laser light L through the through holes 31a provided in the housing member 3 of the weighing device 1A. In this embodiment, the irradiation unit 102 is disposed in the space below the support base 101 and is configured to be movable in the front-rear and left-right directions. The irradiation unit 102 performs the laser light L irradiation process based on control signals from the control unit 105.

The transfer unit 103 is a device for transferring a weight W having a predetermined mass between any position on the weighing pan 2 and a position away from the weighing pan 2. The transfer unit 103 can be configured, for example, by a robot arm configured to grip and move the weight W, or a suction device configured to hold and move the weight W by suction.

The suction unit 104 is a device for sucking scattering particles, which are part of the strain body 5 scattered into the air by the irradiation of the laser light L. In this embodiment, the suction unit 104 is disposed in the space below the support base 101, similar to the irradiation unit 102. The suction unit 104 may be disposed inside the housing member 3 by passing through the through holes 31a at a position offset from the optical path of the laser light L. In this case, the suction unit 104 can be brought closer to the strain body 5, thereby improving the effect of suctioning the scattering particles scattered by the irradiation of the laser light L.

The control unit 105 is a device for controlling the operations of the irradiation unit 102, the transfer unit 103, and the suction unit 104. The control unit 105 can be configured by a computer device including a processor, memory, and the like. The control unit 105 is configured to communicate with the load cell 4 (weight sensor not shown) and acquire the weighing values measured by the load cell 4.

When performing the eccentric load adjustment process, the control unit 105 acquires the weighing values measured by the load cell 4 when the weight W is placed on each of a plurality of regions of the weighing pan 2. In this embodiment, as an example, the control unit 105 acquires the weighing value (reference value) for the central region of the weighing pan 2 when the weighing pan 2 is divided into nine equal parts in a grid pattern, as well as the weighing values for the eight regions surrounding the central region: "left front (LF)", "center front (CF)", "right front (RF)", "left center (LC)", "right center (RC)", "left back (LB)", "center back (CB)", and "right back (RB)". Hereinafter, the region in the left front of the weighing pan 2 is referred to as "region LF", and the other regions are similarly referred to. For example, the control unit 105 acquires the weighing value measured by the load cell 4 when the weight W is placed on the region LF of the weighing pan 2 as the weighing value corresponding to the region LF. The control unit 105 determines the irradiation position and the amount of processing of the laser light L based on the weighing values corresponding to each of the plurality of regions acquired as described above, and controls the operation of the irradiation unit 102 based on the determined irradiation position and amount of processing.

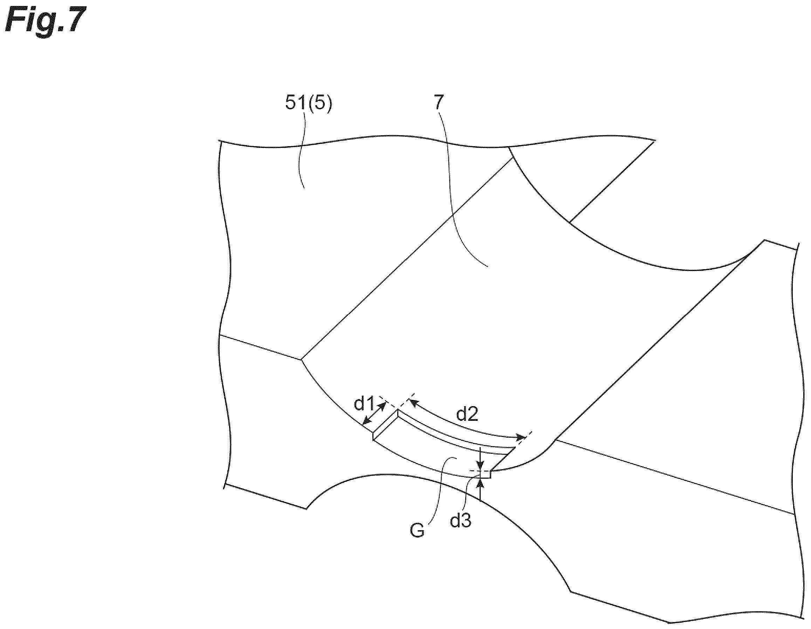

FIG. 7 is a diagram showing an example of the state of the plate spring portion 6 (lower plate spring portion 7) after laser processing. As shown in FIG. 7, the control unit 105 determines the amount of processing defined by the width d1, length d2, and depth d3 by controlling the operation of the irradiation unit 102. Here, the width d1 is the length along the left-right direction (Y-axis direction) of the processing area (portion to be cut), the length d2 is the length along the front-rear direction (X-axis direction) of the processing area, and the depth d3 is the length along the vertical direction (Z-axis direction) of the processing area. Here, the control unit 105 may determine the amount of processing by adjusting all of the width d1, length d2, and depth d3, or by adjusting at least one of the width d1, length d2, and depth d3. In this embodiment, as an example, the control unit 105 sets the length d2 and depth d3 to fixed values and treats only the width d1 as the adjustment target. That is, in this embodiment, the process of determining the irradiation position and the amount of processing of the laser light L described above means selecting the lower plate spring portion 7 to be processed and determining the cutting width (width d1) of the selected lower plate spring portion 7. By performing the laser processing based on the amount of processing determined in this way, a groove G as shown in FIG. 7 is formed in the lower plate spring portion 7.

The storage unit 106 stores relational information indicating the relationship between the position and amount of the part of the strain body 5 (plate spring portion 6 in this embodiment) removed by the laser light L and the change amount of the eccentric load error of the weighing device 1A.

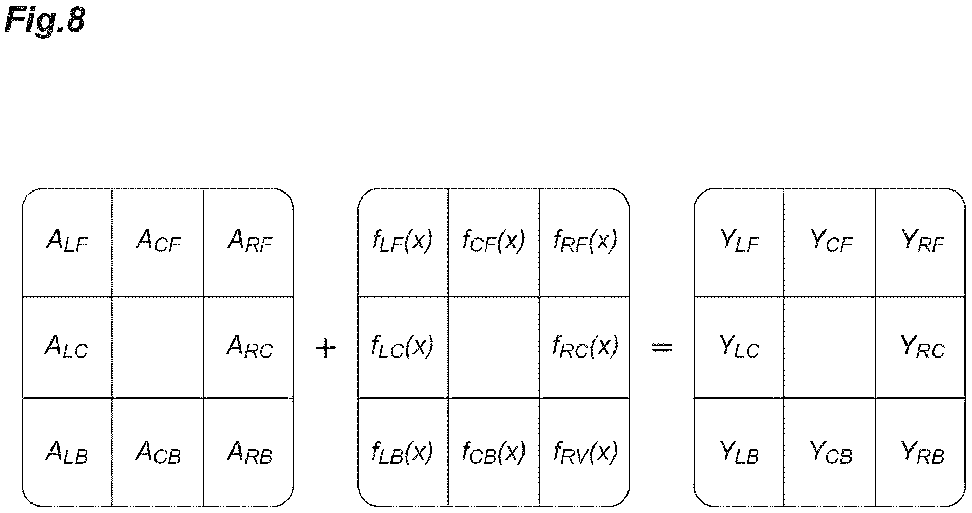

An example of the relational information will be described with reference to FIG. 8. In FIG. 8, "An" (n is an identifier indicating each of the regions described above) is the eccentric load error measured in the region n. "fn(X)" is a function indicating the relationship between the position and amount of the part of the strain body 5 removed by the laser light L and the change amount of the eccentric load error in the region n. Here, X is a variable including the processing amounts (cutting amounts) of each of the four lower plate spring portions 7. That is, X includes the processing amount x1 of the lower plate spring portion 71 in the left front, the processing amount x2 of the lower plate spring portion 72 in the right front, the processing amount x3 of the lower plate spring portion 73 in the left rear, and the processing amount x4 of the lower plate spring portion 74 in the right rear. In this embodiment, as described above, the processing amount is determined by the cutting width (width d1). That is, in this embodiment, the processing amount x1 of the lower plate spring portion 71 means the cutting width (width d1) of the lower plate spring portion 71. The same applies to the processing amounts x2, x3, and x4 of the other lower plate spring portions 72, 73, and 74.

As an example, when the change amount of the eccentric load error in the region n has a linear relationship with the processing amounts x1 to x4 of each of the lower plate spring portions 7, it can be expressed as "fn(X) = an × x1 + bn × x2 + cn × x3 + dn × x4". Here, the parameters an, bn, cn, and dn can be obtained from the results of eccentric load adjustments performed in the past on weighing devices of the same standard as the weighing device 1A to be adjusted. For example, by repeating the process of cutting the lower plate spring portion 71 with a cutting width of 2 mm and measuring the eccentric load error in the region n after cutting, the pairs of the processing amount x1 of the lower plate spring portion 71 and the eccentric load error in the region n can be plotted on a coordinate system with the processing amount on the horizontal axis and the eccentric load error on the vertical axis. By applying a method such as the least squares method to the plurality of pairs plotted in this way, the parameter an of the function fn(X) described above can be calculated.

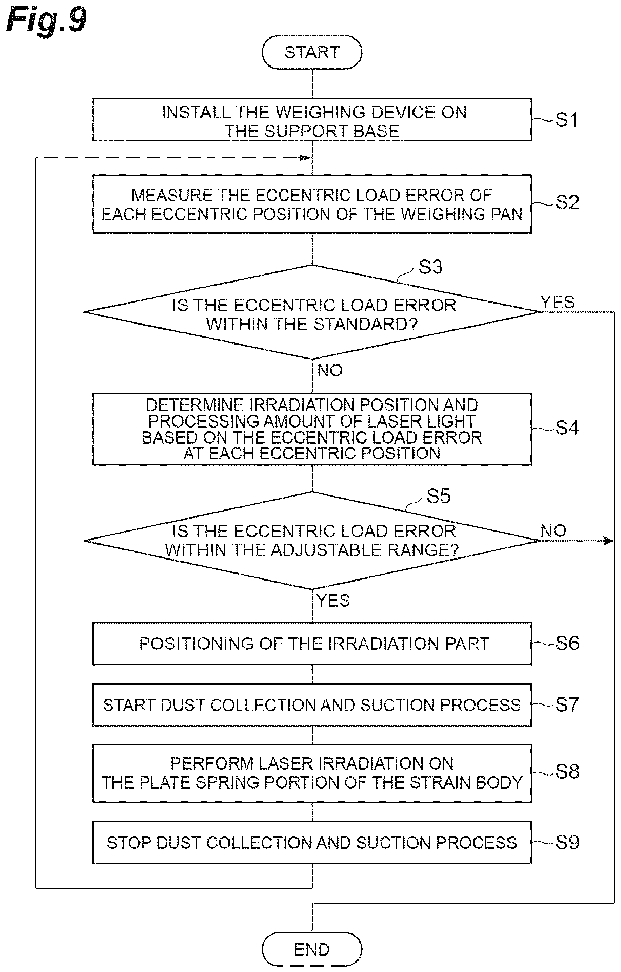

Next, an example of the weighing adjustment process (laser eccentric load adjustment) by the weighing adjustment device 100A will be described with reference to the flowchart shown in FIG. 9.

In step S1, the weighing device 1A is installed on the support base 101. At this time, the alignment of the coordinates held inside the transfer unit 103 with the eccentric positions of the weighing pan 2 of the weighing device 1A (in this embodiment, the eight regions LF, CF, RF, LC, RC, LB, CB, and RB excluding the central region described above) may be performed (for example, a process of aligning the center of each region with a predetermined coordinate position). For example, the weighing device 1A may be installed on the support base 101 along a physical guide (for example, a guide wall portion for aligning the side wall portion 32 of the weighing device 1A) provided on the support base 101. However, the above alignment is not essential. For example, if the transfer unit 103 is provided with a camera and the correspondence between the coordinates held inside the transfer unit 103 and the eccentric positions of the weighing pan 2 can be grasped based on the image of the weighing device 1A (weighing pan 2) captured by the camera, precise alignment is not necessary. In this case, it is sufficient to install the weighing device 1A at an approximate position on the support base 101 so that the through holes 101a of the support base 101 and the through holes 31a provided in the bottom wall portion 31 of the weighing device 1A overlap.

In step S2, the control unit 105 measures the eccentric load error of each eccentric position of the weighing pan 2. To do this, first, the control unit 105 acquires the weighing values measured by the load cell 4 when the weight W having a predetermined mass is placed on the central region of the weighing pan 2 and each of the surrounding regions LF, CF, RF, LC, RC, LB, CB, and RB (first process, first step). As an example, the control unit 105 executes the first process by controlling the operation of the transfer unit 103 and acquiring the weighing value of the load cell 4 each time the transfer operation of the weight W to each of the plurality of regions is completed. The first process acquires the weighing value (reference value) of the central region and the weighing values (eight weighing values) of each eccentric position. The control unit 105 calculates the difference between the weighing value of each eccentric position and the reference value as the eccentric load error of each eccentric position. For example, if the reference value is M and the weighing value obtained when the weight W is placed on one eccentric position (for example, region LF) is M_{LF}, the eccentric load error of the region LF is obtained by calculating "M_{LF} - M". The eccentric load errors of other eccentric positions are also obtained by similar calculations.

In step S3, the control unit 105 determines whether the eccentric load error of each region n measured in step S2 is within the standard (allowable range). If the eccentric load error of each region n is not within the standard, the control unit 105 determines that eccentric load adjustment is necessary (step S3: NO) and proceeds to step S4. On the other hand, if the eccentric load error of each region n is within the standard, the control unit 105 determines that eccentric load adjustment is not necessary (step S3: YES) and completes the eccentric load adjustment process.

In step S4, the control unit 105 determines the irradiation position and the amount of processing of the laser light L by the irradiation unit 102 based on the weighing values corresponding to each of the plurality of regions acquired in the first process (second process, second step). In this embodiment, the control unit 105 determines the irradiation position and the amount of processing of the laser light L based on the eccentric load errors of each eccentric position calculated in step S2. As an example, the control unit 105 determines the position and amount of the part of the strain body 5 to be removed by the laser light L (processing amount) to reduce the eccentric load error based on the eccentric load errors obtained from the weighing values corresponding to each of the plurality of regions and the relational information stored in the storage unit 106 (in this embodiment, the function f described above).

An example of the process in step S4 will be described with reference to FIG. 8. In FIG. 8, An indicates the eccentric load error (current eccentric load error) before laser processing in the region n. Yn indicates the eccentric load error in the region n after performing laser processing with the processing amount X. The purpose of the eccentric load adjustment process is to make the eccentric load error Yn of each region n as small as possible (close to 0). Therefore, the control unit 105 determines the processing amount X (processing amounts x1, x2, x3, x4 of each lower plate spring portion 7) so that the sum of the squares of the components (Y_{LF}, Y_{CF}, ..., Y_{RB}) of the adjusted eccentric load error Yn of each region n is minimized, for example, by using a method such as the least squares method.

In step S5, the control unit 105 determines whether the eccentric load error is within the adjustable range. Specifically, the control unit 105 determines whether the eccentric load error can be brought within the standard with a cutting amount (processing amount) below a certain level in the laser irradiation (cutting processing of the lower plate spring portion 7 by the laser light L) in step S8 described later. For example, if the absolute value or variation of the eccentric load error of each eccentric position is large and the eccentric load error cannot be brought within the standard with a processing amount below a certain level (step S5: NO), the weighing adjustment device 100A may interrupt the eccentric load adjustment process for the weighing device 1A to be adjusted and discard the weighing device 1A. For example, if the processing amount (cutting amounts x1 to x4 of each lower plate spring portion 7) determined in step S4 is equal to or greater than a predetermined threshold, the control unit 105 determines that the eccentric load error is not within the adjustable range and interrupts the eccentric load adjustment process. On the other hand, if the processing amount is less than the threshold, the control unit 105 determines that the eccentric load error is within the adjustable range and proceeds to step S6. Here, the "processing amount below a certain level" means, for example, a processing amount within a range that can sufficiently ensure the strength of the plate spring portion 6 (lower plate spring portion 7 in this embodiment) to be laser processed.

In step S6, the control unit 105 performs positioning of the irradiation unit 102. That is, the control unit 105 adjusts the position, angle, etc., of the irradiation unit 102 so that the laser light L is irradiated at the irradiation position determined in step S4. For example, if the lower plate spring portion 71 is determined as the irradiation target in step S4, the control unit 105 performs positioning of the irradiation unit 102 so that the laser light L can be irradiated at the irradiation position of the lower plate spring portion 71 through the through hole 101a of the support base 101 and the through hole 31a1 of the bottom wall portion 31 corresponding to the lower plate spring portion 71. Such positioning can be performed, for example, as follows. That is, the control unit 105 acquires an image of the vicinity of the irradiation position by the camera provided in the irradiation unit 102 and analyzes the image to align the position, angle, etc., of the irradiation unit 102 so that the irradiation position of the irradiation unit 102 matches the irradiation position determined in step S4.

In step S7, the control unit 105 starts the suction operation (dust collection suction process) by the suction unit 104.

In step S8, the control unit 105 controls the irradiation unit 102 to irradiate the strain body 5 (specifically, the lower plate spring portion 7 determined as the irradiation position) with the laser light L based on the irradiation position and processing amount determined in step S4 and removes a part of the strain body 5 (third process, third step). For example, if the lower plate spring portion 71 is determined as the irradiation target and the processing amount x1 is determined in step S4, the control unit 105 adjusts the irradiation conditions (e.g., beam diameter, beam intensity, irradiation interval (pulse interval), number of irradiations, etc.) of the laser light L by the irradiation unit 102 according to the processing amount x1. As a result, the cutting process with the processing amount x1 determined in step S4 is performed on the lower plate spring portion 71.

In step S9, the control unit 105 stops the suction operation (dust collection suction process) by the suction unit 104. By starting the suction operation of the suction unit 104 at the timing immediately before step S8 (step S7) and stopping the suction operation of the suction unit 104 at the timing immediately after step S8 (step S9), the control unit 105 controls the operation of the suction unit 104 so that the suction by the suction unit 104 is not executed in parallel with the first process (step S2) and is executed in parallel with the third process (step S8).

After the completion of step S9, the control unit 105 returns to step S2. As a result, the processes of steps S2 to S9 are repeatedly executed until the eccentric load error is within the standard.

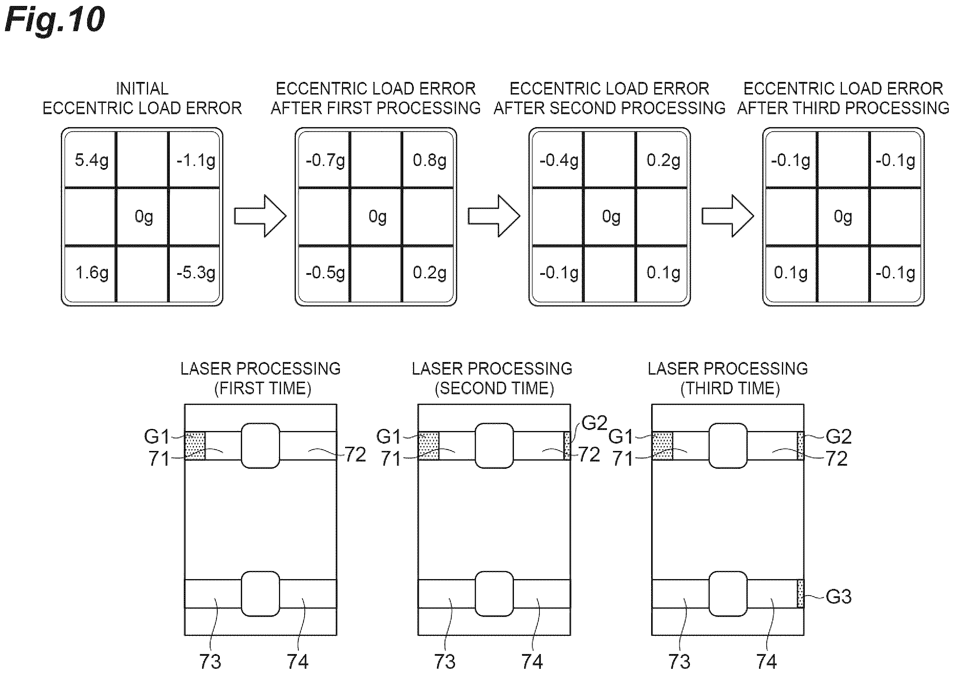

An example of the weighing adjustment process will be described with reference to FIG. 10. In the upper part of FIG. 10, only the eccentric load errors of the four corners (regions LF, RF, LB, RB) of the eight regions of the weighing pan 2, which are likely to have large eccentric load errors, are shown, and the eccentric load errors of the other regions CF, LC, RC, and CB are omitted. In the example of FIG. 10, in the initial state, the eccentric load error of the region LF is 5.4 g, the eccentric load error of the region RF is -1.1 g, the eccentric load error of the region LB is 1.6 g, and the eccentric load error of the region RB is - 5.3 g. Such eccentric load errors of each region are obtained by the process of step S2 described above. In this example, in step S4, the lower plate spring portion 71 is determined as the irradiation position of the laser light, and "2 mm" is determined as the processing amount x1. As a result, in the laser processing of step S8, a groove G1 is formed on the lower surface of the lower plate spring portion 71. In step S2 after the first laser processing, the eccentric load errors of each region n after the laser processing (eccentric load error after the first processing shown in FIG. 10) is measured. As an example, if "the eccentric load error of each region n is 0.1 g or less" is set as the end condition of the eccentric load adjustment process, the "eccentric load error after the first processing" is smaller than the "initial eccentric load error" but do not meet the end condition. Therefore, in step S3, it is determined that the eccentric load error is not within the standard (i.e., re-adjustment is necessary), and the second laser processing is performed.

In the second laser processing, in step S4 again, based on the "eccentric load error after the first processing," the lower plate spring portion 72 is determined as the irradiation position of the laser light, and "0.2 mm" is determined as the processing amount x2. As a result, in the laser processing of step S8, a groove G2 is formed on the lower surface of the lower plate spring portion 72. In step S2 after the second laser processing, the eccentric load error of each region n after the laser processing (eccentric load error after the second processing shown in FIG. 10) is measured. The "eccentric load error after the second processing" is smaller than the "eccentric load error after the first processing" but do not meet the end condition. Therefore, in step S3, it is determined that the eccentric load error is not within the standard, and the third laser processing is performed.

In the third laser processing, in step S4 again, based on the "eccentric load error after the second processing," the lower plate spring portion 74 is determined as the irradiation position of the laser light, and "0.1 mm" is determined as the processing amount x4. As a result, in the laser processing of step S8, a groove G3 is formed on the lower surface of the lower plate spring portion 74. In step S2 after the third laser processing, the eccentric load error of each region n after the laser processing (eccentric load error after the third processing shown in FIG. 10) is measured. The "eccentric load error after the third processing" meet the end condition. Therefore, in step S3, it is determined that the eccentric load error is within the standard (i.e., re-adjustment is not necessary), and the eccentric load adjustment process is completed.

In the example shown in FIG. 10, the eccentric load error of each region was re-measured after the completion of each laser processing on one lower plate spring portion 7, but the eccentric load error may be re-measured after performing laser processing on multiple lower plate spring portions 7 based on the determination in step S4. For example, if the processing amounts X of each lower plate spring portion 7 are determined as "(x1, x2, x3, x4) = (2 mm, 0.2 mm, 0, 0.1 mm)" in step S4, the control unit 105 may sequentially perform laser processing on the lower plate spring portions 71, 72, and 74 in step S8. By performing laser processing on multiple locations without re-measuring the eccentric load error in between, the number of eccentric load error measurements can be reduced, and the eccentric load adjustment process can be performed quickly and efficiently.

### (Effects of the First Embodiment)

In the weighing device 1A described above, the housing member 3 accommodating the load cell 4 is provided with through holes 31a for guiding laser light L from outside the housing member 3 to the strain body 5 inside the housing member 3. This allows the eccentric load error to be accurately calculated based on the weighing values measured by the load cell 4 when a weight W having a predetermined mass is placed on any position of the weighing pan 2 in the completed state (i.e., product form or near-product form) where the load cell 4 is housed in the housing member 3 and the weighing pan 2 is disposed above the load cell 4, and a part of the strain body 5 can be accurately removed (i.e., laser light L is irradiated to a part of the strain body 5) to reduce the eccentric load error. Therefore, the weighing device 1A can effectively reduce the eccentric load error. That is, by performing the eccentric load adjustment in the completed state, the accuracy of the eccentric load adjustment can be improved, and the quality of the weighing device 1A can be enhanced.

In addition, in the weighing device 1A, after performing the process of measuring the eccentric load error of each region of the weighing pan 2 (step S2 in FIG. 9), it is not necessary to remove the strain body 5 from the housing member 3 before performing the process of irradiating the strain body 5 with the laser light L (step S8 in FIG. 9). Also, after performing the process of irradiating the strain body 5 with the laser light L (step S8 in FIG. 9), it is not necessary to reattach the strain body 5 inside the housing member 3 before performing the process of measuring the eccentric load error of each region of the weighing pan 2 (step S2 in FIG. 9). Therefore, by using the weighing adjustment device 100A described above, the eccentric load adjustment process can be automated.

In addition, the strain body 5 has thinned plate spring portions 6, and the through holes 31a are provided at positions facing the plate spring portions 6 (lower plate spring portions 7 in this embodiment). According to the above configuration, the laser light L can be irradiated to the plate spring portions 6 of the strain body 5 through the through holes 31a provided in the housing member 3 to remove a part of the plate spring portions 6, and the eccentric load adjustment by the irradiation of the laser light L can be performed more suitably. That is, by removing a part of the plate spring portions 6 by the irradiation of the laser light L and adjusting the Roberval pitch (i.e., the distance between the lower plate spring portions 7 and the upper plate spring portions 8 facing each other in the Z-axis direction), the eccentric load adjustment can be easily performed.

In addition, the plate spring portions 6 include lower plate spring portions 7 provided on the lower surface 51 of the strain body 5, the housing member 3 includes a bottom wall portion 31 disposed at a position facing the lower surface 51 of the strain body 5, and the through holes 31a are provided in the bottom wall portion 31 so as to face the lower plate spring portions 7. According to the above configuration, the laser light L can be irradiated to the lower plate spring portions 7 of the strain body 5 through the through holes 31a provided in the bottom wall portion 31 on the bottom side of the weighing device 1A to remove a part of the lower plate spring portions 7. This allows the eccentric load adjustment to be accurately performed in the completed state where the upper structure of the load cell 4 (i.e., the load cell 4, the weighing pan 2, and the members disposed between the load cell 4 and the weighing pan 2) is completed.

In addition, the weighing adjustment device 100A described above includes an irradiation unit 102 configured to irradiate the strain body 5 with laser light L through the through holes 31a provided in the housing member 3, and a control unit 105 configured to acquire the weighing values measured by the load cell 4 when the weight W having a predetermined mass is placed on each of a plurality of regions of the weighing pan 2, determine the irradiation position and the amount of processing of the laser light L based on the weighing values corresponding to each of the plurality of regions (in this embodiment, the eccentric load errors calculated based on the weighing values), and control the operation of the irradiation unit 102 based on the determined irradiation position and amount of processing. According to the weighing adjustment device 100A, by configuring the irradiation unit 102 to irradiate the strain body 5 with laser light L through the through holes 31a provided in the housing member 3 of the weighing device 1A, it is not necessary to remove the strain body 5, which is the irradiation target of the laser light L, from the housing member 3 of the weighing device 1A between the process of acquiring the weighing values and the process of irradiating the laser light L. Therefore, the eccentric load adjustment (i.e., the series of processes from placing the weight W on the weighing pan 2 and acquiring the weighing values of each region to irradiating the strain body 5 with the laser light L) of the weighing device 1A can be automated by the series of control processes by the control unit 105. In addition, such automation can reduce the processes involving human intervention. This can improve the accuracy of the eccentric load adjustment, thereby effectively reducing the eccentric load error of the weighing device 1A.

In addition, the weighing adjustment device 100A repeatedly executes the first process, the second process, and the third process described above until the eccentric load error of the weighing device 1A satisfies the predetermined allowable condition (e.g., the absolute value of the eccentric load error of each region n of the weighing pan 2 is equal to or less than a predetermined threshold (e.g., 0.1 g)). According to the above configuration, the eccentric load adjustment process can be automated so that the eccentric load error of the weighing device 1A satisfies the allowable condition.

In addition, the control unit 105 controls the operation of the suction unit 104 so that the suction by the suction unit 104 is not executed in parallel with the first process (step S2 in FIG. 9) and is executed in parallel with the third process (step S8 in FIG. 9). According to the above configuration, the occurrence of malfunction of the weighing device 1A due to the scattering particles generated by the irradiation of the laser light L remaining inside the housing member 3 can be suppressed, and the occurrence of errors in the weighing values acquired in the weighing phase (first process) due to the suction process by the suction unit 104 can be prevented.

In addition, the control unit 105 controls the operation of the transfer unit 103 and executes the first process (step S2 in FIG. 9) by acquiring the weighing value each time the transfer operation of the weight W to each of the plurality of regions of the weighing pan 2 is completed. According to the above configuration, the process of acquiring the weighing values of each of the plurality of regions of the weighing pan 2 by the transfer unit 103 can be automated, thereby improving the work efficiency of the eccentric load adjustment process.

In addition, in the second process (step S4 in FIG. 9), the control unit 105 determines the irradiation position and the amount of processing of the laser light L capable of reducing the eccentric load error of each region n based on the eccentric load errors obtained from the weighing values corresponding to each of the plurality of regions and the relational information stored in the storage unit 106 (in this embodiment, the function f shown in FIG. 8). According to the above configuration, the irradiation position and the amount of processing of the laser light L can be uniformly and automatically determined by numerical calculation using the relational information.

In addition, according to the weighing adjustment method (e.g., the method shown in the flowchart of FIG. 9) by the weighing adjustment device 100A described above, the eccentric load adjustment of the weighing device 1A can be automated by repeatedly executing the first step (step S2 in FIG. 9), the second step (step S4 in FIG. 9), and the third step (step S8 in FIG. 9) until the eccentric load error of the weighing device 1A satisfies the allowable condition. In addition, by performing the first step to the third step on the completed weighing device 1A (i.e., since the removal work of the weighing pan 2, the housing member 3, and the strain body 5, etc., does not occur between the steps), the eccentric load adjustment can be performed accurately and efficiently.

### [Second Embodiment]

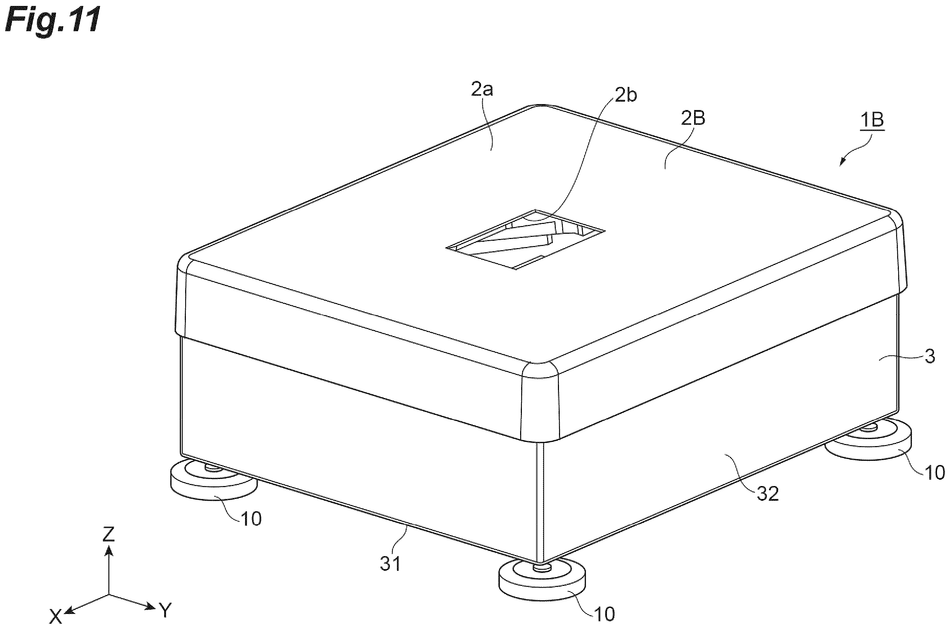

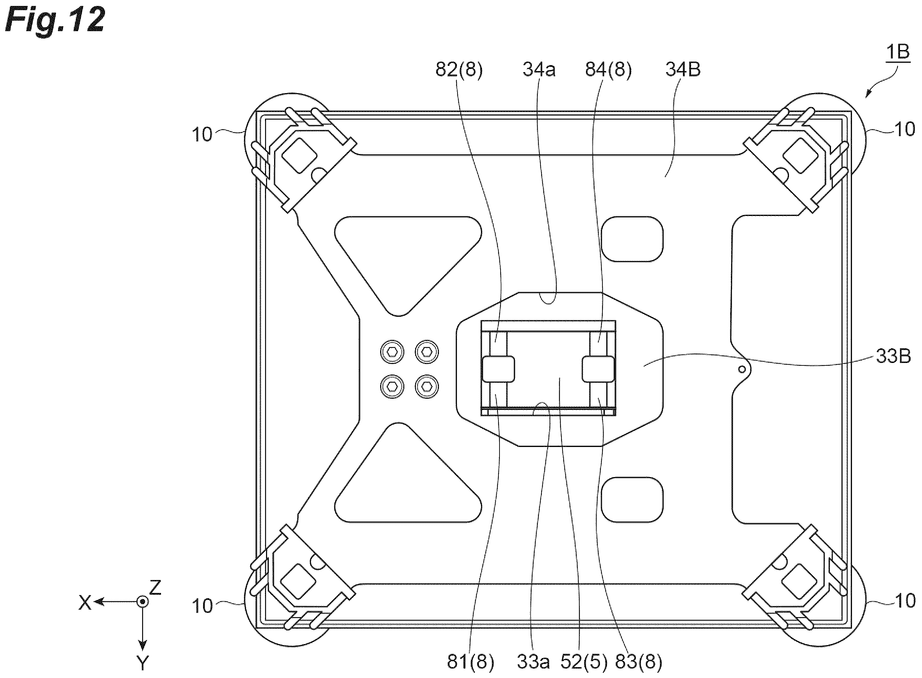

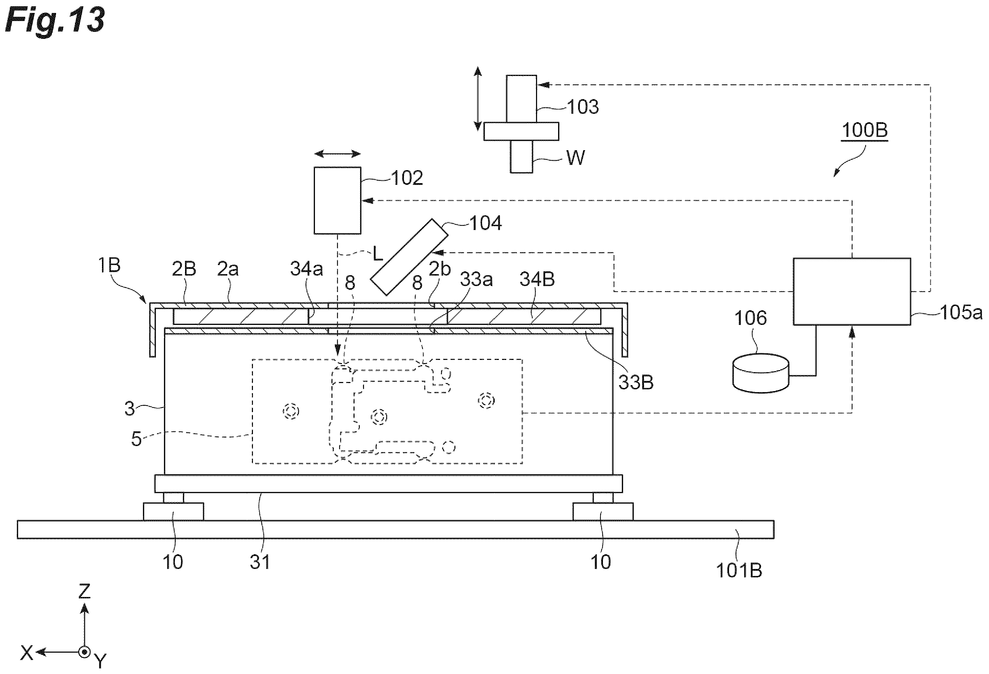

The weighing device 1B and the weighing adjustment device 100B according to the second embodiment will be described with reference to FIGS. 11 to 13. FIG. 11 is a perspective view of the weighing device 1B. FIG. 12 is a plan view showing a state where the weighing pan 2B of the weighing device 1B is removed. FIG. 13 is a diagram showing a schematic configuration of the weighing adjustment device 100B.

As shown in FIGS. 11 and 12, the weighing device 1B mainly differs from the weighing device 1A in that it includes a weighing pan 2 provided with a through hole 2b, a top wall portion 33B provided with a through hole 33a (second through hole), and a pan base 34B provided with a through hole 34a (second through hole). That is, the weighing device 1B includes through holes 33a and 34a provided in the top wall portion 33B and the pan base 34B, respectively, disposed at positions facing the upper surface 52 of the strain body 5, as through holes for guiding laser light L irradiated from outside the housing member 3 to the strain body 5 disposed inside the housing member 3.

In this embodiment, as an example, as shown in FIG. 12, the through holes 33a and 34a are provided so that the upper surface of the upper plate spring portion 8 can be seen through the through holes 33a and 34a when viewed from the Z-axis direction. That is, the through holes 33a and 34a are provided at positions overlapping the regions including the four upper plate spring portions 81 to 84 in the Z-axis direction. However, the through holes 33a and 34a do not necessarily have to be provided directly above the regions including the upper plate spring portions 81 to 84. For example, the through holes 33a and 34a may be provided so that at least a part of the upper surface of the upper plate spring portions 81 to 84 can be seen through the through holes 33a and 34a when the weighing device 1B is viewed from above at a predetermined angle inclined with respect to the Z-axis direction.

The through hole 2b is provided at a position and size overlapping the through hole 33a in the Z-axis direction (see FIG. 13). This allows the laser light L to be irradiated to the upper plate spring portions 81 to 84 through the through holes 2b, 33a, and 34a from above the weighing device 1B while the weighing pan 2B is attached to the pan base 34B.

In the weighing device 1B, it is not necessary to provide the through holes 31a in the bottom wall portion 31 as in the weighing device 1A, but if the eccentric load adjustment using the weighing adjustment device 100A is to be performed on the weighing device 1B, the bottom wall portion 31 of the weighing device 1B may also be provided with through holes 31a facing the lower plate spring portions 7, similar to the weighing device 1A.

As shown in FIG. 13, the weighing adjustment device 100B is a device for adjusting the weighing device 1B so that the eccentric load error is reduced. The weighing adjustment device 100B mainly differs from the weighing adjustment device 100A in that it includes a support base 101B instead of the support base 101, and the irradiation unit 102 and the suction unit 104 are disposed above the support base 101B (above the weighing device 1B). That is, in the first embodiment, the weighing adjustment device 100A performed the cutting processing on the lower plate spring portions 7 of the strain body 5 of the weighing device 1A by irradiating the laser light L from below the weighing device 1A, whereas the weighing adjustment device 100B is configured to perform the cutting processing on the upper plate spring portions 8 of the strain body 5 of the weighing device 1B by irradiating the laser light L from above the weighing device 1B. The control configuration of the weighing adjustment device 100B other than the above is the same as the control configuration of the weighing adjustment device 100A described above (the processing content shown in the flowchart of FIG. 9). In step S4 of FIG. 9, the control unit 105 may use the function (relational information) indicating the relationship between the processing amounts x1 to x4 of the four upper plate spring portions 81 to 84 and the change amounts of the eccentric load errors of each region n.

### (Effects of the Second Embodiment)

The plate spring portions 6 include upper plate spring portions 8 provided on the upper surface 52 of the strain body 5, the housing member 3 includes a top wall portion 33B and a pan base 34B disposed at positions facing the upper surface 52 of the strain body 5, and the through holes 33a and 34a are provided in the top wall portion 33B and the pan base 34B so as to face the upper plate spring portions 8. According to the above configuration, the laser light L can be irradiated to the upper plate spring portions 8 of the strain body 5 through the through holes 33a and 34a provided in the top wall portion 33B and the pan base 34B to remove a part of the upper plate spring portions 8. This allows the processes necessary for the eccentric load adjustment, such as transferring the weight W to the weighing pan 2B and irradiating the laser light L, to be performed from the upper side of the weighing device 1B, thereby improving the work efficiency of positioning various devices. For example, the irradiation unit 102, the transfer unit 103, and the suction unit 104 can be simultaneously positioned based on the image captured by the camera installed above the weighing device 1B.

In addition, in the second embodiment, the through holes 33a and 34a of the housing member 3 are provided at positions facing the central portion of the weighing pan 2B, and the central portion of the weighing pan 2B is provided with a through hole 2b facing a part of the strain body 5 (upper plate spring portions 8 in this embodiment) through the through holes 33a and 34a of the housing member 3. In the third step of the eccentric load adjustment process (step S8 in FIG. 9), the laser light L is irradiated to a part of the strain body 5 from above the weighing pan 2B through the through holes 2b, 33a, and 34a. According to the above configuration, the eccentric load adjustment process can be executed by the method of irradiating the laser light L from above the weighing device 1B to remove a part of the strain body 5 (upper plate spring portions 8) on the side of the weighing pan 2B. In addition, since it is not necessary to remove the weighing pan 2B during the eccentric load adjustment process, the eccentric load adjustment can be performed accurately and efficiently.

In the second embodiment, the weighing device 1B may have a weighing pan 2 similar to the weighing pan 2 of the weighing device 1A instead of the weighing pan 2B. In this case, although the attachment and detachment operation of the weighing pan 2 is necessary between the process of measuring the eccentric load error of each region of the weighing pan 2 (step S2 in FIG. 9) and the process of irradiating the strain body 5 with the laser light L (step S8 in FIG. 9), since it is not necessary to remove the housing member 3 (pan base 34B, etc.) and the strain body 5 inside the housing member 3 disposed below the weighing pan 2, the eccentric load adjustment process can be performed accurately and efficiently to that extent.

In addition, in the second embodiment, after the completion of the eccentric load adjustment process, the weighing pan 2B of the weighing device 1B may be replaced with a weighing pan 2 similar to the weighing pan 2 of the weighing device 1A that does not have the through hole 2b. That is, the weighing pan 2B may be used only during the eccentric load adjustment process by the weighing adjustment device 100B. Similarly, after the completion of the eccentric load adjustment process, the top wall portion 33B may be replaced with a top wall portion 33 similar to the top wall portion 33 of the weighing device 1A. Alternatively, in the second embodiment, the top wall portion 33 may not be attached during the eccentric load adjustment process. That is, the top wall portion 33 may be attached after the eccentric load adjustment process is performed.

The weighing device, weighing adjustment device, and weighing adjustment method according to the present disclosure are not limited to the above embodiments. For example, the shapes, materials, etc., of each member are not limited to the above embodiments. In addition, in the above embodiments, the form in which the series of eccentric load adjustment processes is automated by the weighing adjustment devices 100A and 100B is exemplified, but the above-described eccentric load adjustment processes do not have to be completely automated. For example, some of the above-described eccentric load adjustment processes may be manually executed by human hands. For example, in step S2 of FIG. 9, the process of placing the weight W on each region of the weighing pan 2 and weighing may be manually executed by an operator. For example, the operator may manually execute the process of placing the weight W on a predetermined region of the weighing pan 2 according to the instructions output from the control unit 105 (e.g., a message in text or voice such as "Please place the weight on the left front region. ").

In addition, for one weighing device, both the process of laser processing the lower plate spring portions 7 from below the weighing device as in the first embodiment and the process of laser processing the upper plate spring portions 8 from above the weighing device as in the second embodiment may be performed. In this case, the weighing device may have both the configuration of the weighing device 1A (i.e., the configuration in which the through holes are provided in the bottom wall portion) and the configuration of the weighing device 1B (i.e., the configuration in which the through holes are provided in the top wall portion and the pan base).

In addition, in the above embodiments, as shown in FIGS. 7 and 10, the configuration in which the cutting processing is performed by laser processing from the outer edge in the Y-axis direction of the plate spring portions 6 is exemplified, but the position (starting position, etc.) of the cutting processing is not limited to the above. For example, the cutting processing may be started from the central portion in the Y-axis direction of the plate spring portions 6.

### Reference Signs List

1A, 1B weighing device
2, 2B weighing pan
2b through hole
101a through hole
3 housing member
4 load cell
5 strain body
6 plate spring portion
7, 71, 72, 73, 74 lower plate spring portion (first plate spring portion)
8, 81, 82, 83, 84 upper plate spring portion (second plate spring portion)
31 bottom wall portion
31a, 31a1, 31a2, 31a3, 31a4 through hole (first through hole)
33, 33B top wall portion (second member)
33a through hole (second through hole)
34, 34B pan base (second member)
34a through hole (second through hole)
100A, 100B weighing adjustment device
102 irradiation unit
103 transfer unit
104 suction unit
105 control unit
106 storage unit
L laser light
W weight.

## Claims

1. A weighing device comprising:
a weighing pan on which an object to be weighed is placed;
a load cell having a strain body disposed below the weighing pan such that a load of the object placed on the weighing pan is applied to the strain body;
a housing member accommodating the load cell,
wherein the housing member is provided with a through hole for guiding laser light irradiated from outside the housing member to the strain body disposed inside the housing member.

2. The weighing device according to claim 1,
wherein the strain body has a thinned plate spring portion, and
the through hole is provided at a position facing the plate spring portion.

3. The weighing device according to claim 2,
wherein the plate spring portion includes a first plate spring portion provided on a side opposite to a side where the weighing pan is positioned with respect to the strain body,
the housing member includes a first member disposed on the side opposite to the side where the weighing pan is positioned with respect to the strain body, and
the through hole includes a first through hole provided in the first member so as to face the first plate spring portion.

4. The weighing device according to claim 2 or 3,
wherein the plate spring portion includes a second plate spring portion provided on a side where the weighing pan is positioned with respect to the strain body,
the housing member includes a second member disposed on the side where the weighing pan is positioned with respect to the strain body, and
the through hole includes a second through hole provided in the second member so as to face the second plate spring portion.

5. A weighing adjustment device for adjusting the weighing device according to claim 1 so that an eccentric load error is reduced, comprising:
an irradiation unit configured to irradiate the strain body with laser light through the through hole provided in the housing member; and
a control unit configured to acquire a weighing value measured by the load cell when a weight having a predetermined mass is placed on each of a plurality of regions of the weighing pan, determine an irradiation position and an amount of processing of the laser light based on the acquired weighing values corresponding to each of the plurality of regions, and control the operation of the irradiation unit based on the determined irradiation position and amount of processing.

6. The weighing adjustment device according to claim 5,
wherein the control unit is configured to repeatedly executes a first process, a second process, and a third process until the eccentric load error of the weighing device satisfies a predetermined allowable condition, wherein
the first process is a process of acquiring the weighing values corresponding to each of the plurality of regions of the weighing pan,
the second process is a process of determining the irradiation position and the amount of processing based on the weighing values corresponding to each of the plurality of regions acquired in the first process; and
the third process is a process of irradiating the strain body with the laser light based on the irradiation position and the amount of processing determined in the second process and removing a part of the strain body by controlling the irradiation unit.

7. The weighing adjustment device according to claim 6,
further comprising a suction unit configured to suck scattering particles, which are part of the strain body scattered into an air by the irradiation of the laser light, and
wherein the control unit controls the operation of the suction unit so that the suction by the suction unit is executed in parallel with the third process and not in parallel with the first process.

8. The weighing adjustment device according to claim 6 or 7,
further comprising a transfer unit configured to transfer the weight between any position on the weighing pan and a position away from the weighing pan, and
wherein the control unit controls the operation of the transfer unit and executes the first process by acquiring the weighing value each time the transfer operation of the weight to each of the plurality of regions is completed.

9. The weighing adjustment device according to claim 6 or 7,
further comprising a storage unit configured to store relational information indicating a relationship between a position and an amount of the part of the strain body removed by the laser light and a change amount of the eccentric load error of the weighing device, and
wherein, in the second process, the control unit determines the irradiation position and the amount of processing capable of reducing the current eccentric load error based on the current eccentric load error obtained from the weighing values corresponding to each of the plurality of regions and the relational information stored in the storage unit.

10. A weighing adjustment method for adjusting the weighing device according to claim 1 so that an eccentric load error is reduced, including:
a first step of acquiring weighing values measured by the load cell when a weight having a predetermined mass is placed on each of a plurality of regions of the weighing pan;
a second step of determining an irradiation position and an amount of processing of the laser light with respect to the strain body based on the weighing values corresponding to each of the plurality of regions acquired in the first step; and
a third step of irradiating the strain body with the laser light through the through hole provided in the housing member and removing a part of the strain body based on the irradiation position and the amount of processing determined in the second step,
wherein the first step, the second step, and the third step are repeatedly executed until the eccentric load error of the weighing device satisfies a predetermined allowable condition.

11. The weighing adjustment method according to claim 10,
wherein the through hole of the housing member is provided at a position facing a central portion of the weighing pan,
the central portion of the weighing pan is provided with a through hole facing a part of the strain body through the through hole of the housing member, and
in the third step, the laser light is irradiated to a part of the strain body from above the weighing pan through the through hole of the weighing pan and the through hole of the housing member.
